# EUROPEAN PATENT APPLICATION

(11) **EP 2 385 280 A1**
(43) Date of publication of application: **09.11.2011**
(21) Application number: 11158887.7
(22) Date of filing: 18.03.2011
(51) Int. Cl.: F16K 5/06, G01F 15/00

(54) **A valve device comprising a removable flow-rate detecting device, and method for adjusting the flow-rate in a thermal plant**

(30) Priority: 23.03.2010 IT MI20100476
(71) Applicant: Caleffi S.p.A., 28010 Fontaneto d'Agogna, Novara (IT)
(72) Inventor: Caleffi, Marco, 28010 Fontaneto d'Agogna (IT)
(74) Representative: Coloberti, Luigi

(57) **Abstract**

A valve device (10) suitable for cutting off and/or detecting a flow-rate in a thermal plant; the valve (10) comprises a valve body (11) having inlet and outlet ports (12, 13) for a fluid, opening into a chamber (14) for a ball-shaped valving member (15) having a flow passage (17) therethrough; a control device to rotate the valving member (15) on a rotational axis orthogonal to the flow path (17), comprises first and second replaceable control members (18', 18") selectively engageable with the valving member (15) through a side aperture in the valve body (11). The valving member (15) comprises at least one through hole (20') axially aligneable to a through hole (26A) of one of said control members (18"), for threading of a probe (28) of a flow-rate detecting device (21); the flow-rate detecting device (21) may be of "Vortex" type comprising an eddies generating member (27) extending into the flow passage (17) of the valving member (15) through axially aligned apertures (26', 20') of said control member (18") and valving member (15) of the valve device (10).

## Description

### BACKGROUND OF THE INVENTION

This invention refers to a ball valve device for cutting off and/or detection of the flow-rate of a fluid in a thermal plant, in particular for geothermal plants, for adjusting and/or balancing the fluid flow-rates between the various circuits connected to distribution manifolds.

This invention also refers to a flow-rate detection kit and a method for adjusting flow-rates in thermal plants.

### PRIOR ART

In the field of heating plants, such as geothermal plants, a problem exists of balancing the flow-rates of a thermal fluid flowing along a number of circuits, or loops, connected to a distribution manifold.

The individual flow circuits may have different lengths and flow resistances with the risk of anomalous circulation of the fluid in the loops, or separate circuits of the plant, such as to compromise the correct functioning.

In order to solve this problem, it is therefore necessary to perform balancing operations of the flow-rates, duly adjusting the flowing of the fluid in the individual circuits.

In order to perform the required flow-rate adjustment, flow control valves are usually provided, for example of the ball type, and flow detecting valves, for example of the type disclosed in EP-A-1978336.

However, for detecting the flow-rate, the traditional flow detecting valves comprise a Venturi or a restricted flow-passage leading to considerable pressure losses, which are limiting the performance of the thermal plant. Furthermore the use of conventional flow-detecting valves involves significant costs, which must be multiplied by the number of circuits present in each thermal plant; since the flow-detecting valves are only used during the installation of the thermal plant, and rarely during successive maintenance operations, there is also a particular need to reduce the involved costs.

EP-A-0200563 and US-A-5560392, which is regarded as being the prior art closest to the present invention, both refer to a ball valve device of conventional type in which a probe or a flow restriction device is permanently provided inside the same valve device.

In particular, US-A-5560392 discloses the use of at least two sensors threaded into corresponding side holes of the valve body, to simultaneously measure two physical properties of a fluid; although US-A-5560392 specify that both sensor may be removed in a closed condition of the valve to allow cleaning by a pressurised fluid, one of the sensor, in the working condition of the valve, is arranged on a side of the valve body opposite to the drive shaft, and provided with a sensor probe permanently extending into a flow passage of a spherical closure piece or vane, permanently causing pressure losses.

### OBJECTS OF THE INVENTION

Therefore an object of the invention is to provide a simple type of ball valve device suitably conformed to be indifferently used for detecting a flow-rate in thermal plants, and for using the same type of valve device to provide balanced condition, which is simple in construction, allows a considerable reduction of the plant costs, and a substantial reduction of the flow resistance and pressure losses.

Another object of this invention is to provide a method for adjusting the balancing conditions of the flow-rates in thermal plants, which may be implemented in a simple way by a cut-off and/or flow-rate detecting valve device according to the invention.

Therefore the cited prior art does not provide an useful teaching and disclosure of a ball valve device comprising flow-rate detecting device suitably conformed to be repeatedly and separately used for opening and closing the ball valve and detecting the flow-rates in different circuits of a thermal plant provided with identically conformed ball valve devices.

### BRIEF DESCRIPTION OF THE INVENTION

The above may be achieved by a ball valve device according to claim 1, by a method according to claim 8 and by a kit according to claim 9.

More properly, according to the invention, a ball valve device has been provided, suitable for detecting a flow-rate in a circuit of a thermal plant, the valve device comprising:
a valve body having inlet and outlet ports for a fluid flow, opening into a chamber for a closure valving member;
a ball-shaped valving member having a fluid-flow passage therethrough, rotatably supported in said chamber about a rotational axis transversely extending to the passage for the fluid;
a control device to rotate the valving member, sealingly extending through a side aperture of the valve body; and
a flow-rate detecting device having a sensing probe extending into the flow-passage of the valving member;
characterised in that the valve device comprises:
   a valving member having at least a first through hole parallely extending to the rotational axis, between the flow passage and a peripheral surface of the same valving member facing the side aperture of the valve body;
   the control device comprising a first control member disengageably connectable to the valving member, in an assembled condition of the ball valve device; and
   a second control member disengageably connectable to the valving member, in substitution of the first control member, said second control member being provided with at least one through hole axially aligneable to the first through hole of the valving member; the sensing probe of the flow-rate detecting device extending into the flow passage of the valving member through said axially aligned holes of the second control member and the valving member of the ball valve device.

According to a further aspect of the invention, a method has been provided for detecting and adjusting a flow-rate of a fluid in a first and at least a second hydraulic circuit of a thermal plant, in which each circuit comprises a first ball valve device for detecting a flow-rate and a second flow control valve device for adjusting the flow-rate, as previously described, the method comprising the steps of:
a) closing the first valve device; of the first circuit and substituting the first control device with the second control device provided with the flow-rate detecting device;
b) opening said first ball valve device and detecting the flow-rate by connecting a flow-rate meter to the flow-rate detecting device;
c) adjusting the flow-rate in the first circuit by the second flow control valve device; and
d) removing and reusing the same second control device and flow-rate detecting device, after removal from the first valve device of the first circuit, to repeat the same steps "a" to "c" for another circuit of the same thermal plant.

### BRIEF DESCRIPTION OF THE DRAWINGS

These and further characteristics of this invention will be described in greater detail, with reference to the attached drawings, in which:
Fig. 1 is a cross-sectional view of a ball valve device according to the invention, in an open condition, comprising a control member provided with a flow-rate detecting device;
Fig. 2 is a cross-sectional view of the valve device in Fig. 1, in a closed condition;
Fig. 3 is a cross-sectional view of the valve device in the open condition of figure 1, provided with a control member of different type;
Fig. 4 is a cross-sectional view of the valve device in Fig. 3, in the closed condition;
Fig. 5 is a perspective view of the control member of the valve device of figure 1, conformed to house the flow-rate detecting device;
Fig. 6 is a perspective view of the ball shaped valving member;
Fig. 7 is an exploded view of the valve device of Fig. 1; and
Fig. 8 is a perspective view showing two fluid distribution manifolds of a thermal plant, provided with valve devices according to the invention, for detecting and adjusting the flow-rates in different circuits of a same thermal plant.

### DETAILED DESCRIPTION OF THE INVENTION

The general characteristics of this invention will be illustrated below through a preferred embodiment.

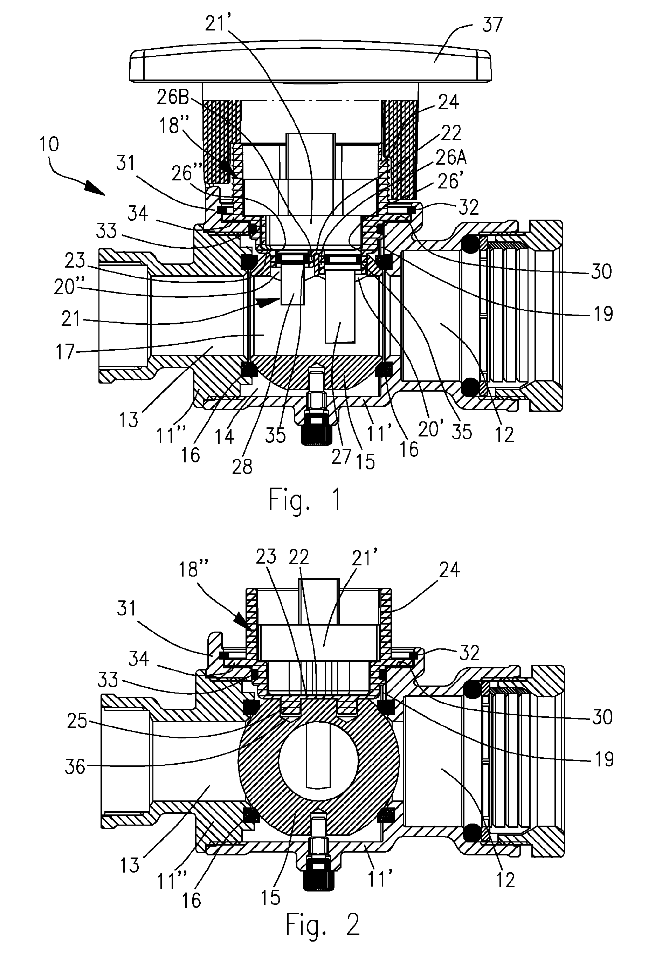

Figures 1 to 4 show a ball-type valve device conformed to be used either for cutting off and/or detecting the flow-rate of a fluid flowing in a hydraulic circuit of a thermal plant, such as geothermal or heating plants and for balancing the flow-rates between several hydraulic circuits, or loops, connected to distribution manifolds.

The valve device, indicated as a whole by the reference number 10, comprises a valve body 11', 11" having inlet and outlet ports 12, 13 for the fluid, which open into an internal chamber 14 for housing a ball shaped valving member 15, rotatably supported in the chamber 14 to open and close the valve.

The two ports 11', 11" of the valve body may be connected to and assembled, for example through threadings, to allow introduction of the valving member 15 into the chamber 14.

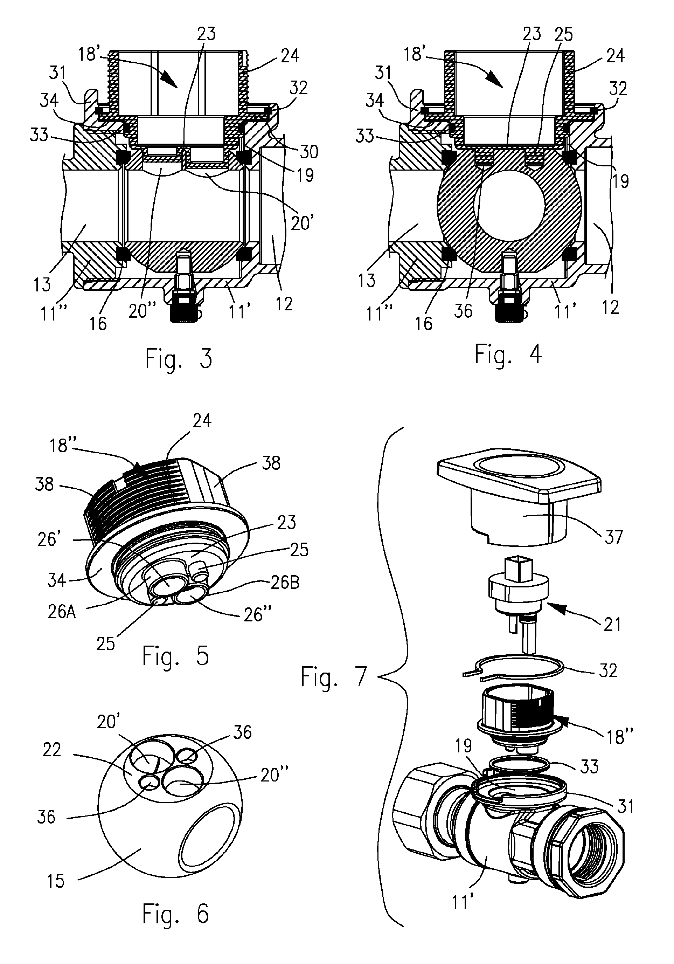

The ball member 15 is rotatably supported in the chamber 14 by sealing rings 16 positioned on the inlet and outlet sides of the chamber 14, to angularly rotate between an open position, shown in Fig. 1 or 3, and a closed position, shown in Fig. 2 or 4; in particular, the valving member 15 is supported to rotate according to an axis of rotation at a right angle to through hole 17 providing a passage for the fluid, diametrically extending to valving member 15 so that, in the open position of the valving member 15, the flow passage 17 is axially aligned to inlet and outlet ports 12, 13.

The valve device 10 also comprises first and second removable control members 18', 18", selectively connectable to the valving member 15 through a side aperture 19 in the valve body 11' facing a flat peripheral surface 22 of the ball shaped valving member 15, as shown in figure 6.

According to this invention, the valving member 15 comprises at least one through hole 20' for the introduction of a probe 28 of a flow-rate detecting device 21 housed into the second control member 18", as shown; the hole 20' extends between the peripheral flat surface 22 of the valving member 15 facing the side aperture 19 of the valve body 11', and the hole 17.

Both control members 18', 18" are in the form of a cup-shaped element which may be sealingly inserted into and removed from the aperture 19 of the valve body 11', the cup-shaped control members 18' and 18" comprising a bottom wall 23 to rest against the peripheral flat surface 22 of the valving member 15.

As explained further on, the removable control members 18', 18" to be applied to the valve device 10, may be chosen between a first control member 18', shown in Figures 3 and 4, provided with protrusions or pins 25 to engage the valving member 15, and a second control member 18", shown in Figures 1 and 2, which, besides having the aforementioned engagement pins 25, is conformed with at least one through hole 26', axially aligned to a through hole 20' of the valving member 15 for the insertion of a probe 28 of a flow-rate detecting device 21.

The valve device 10 therefore may be advantageously used both as an usual valve device for the cutting off and/or adjust the flow-rate, when assembled with the first control member 18', and for detecting the fluid flow-rate, when assembled with the second control member 18", maintaining the possibility of cutting off the flow.

The flow-rate detecting device 21 preferentially comprises a flow sensing probe 28 of Vortex type, which is based on the principle of the Von Kármán vortex street, according to which a so-called "squat" body 27 in a fluid flow generates down-stream alternate detachment of vortexes, the frequency of which is indicative of the speed and the flow-rate of the fluid.

Therefore, appropriately detecting the frequency of the vortexes which are generated by the so called squat body, or Vortex generating element 27, it is possible to establish precisely the speed of the flow, and therefore the flow-rate as a function of the cross-section of passage 17 in the valving member 15.

The flow-rate detecting device 21 preferentially comprises a body 21' from which the Vortex generating element 27 and the probe 28 parallely extend in corresponding through holes 20' and 20" of the ball-shaped valving member 15, as shown. The probe 28 for example is in the form of a piezoresistance fin, capable of detecting the pulsations of pressure generated by the vortexes, converting these pulsations into an electric or digital control signal.

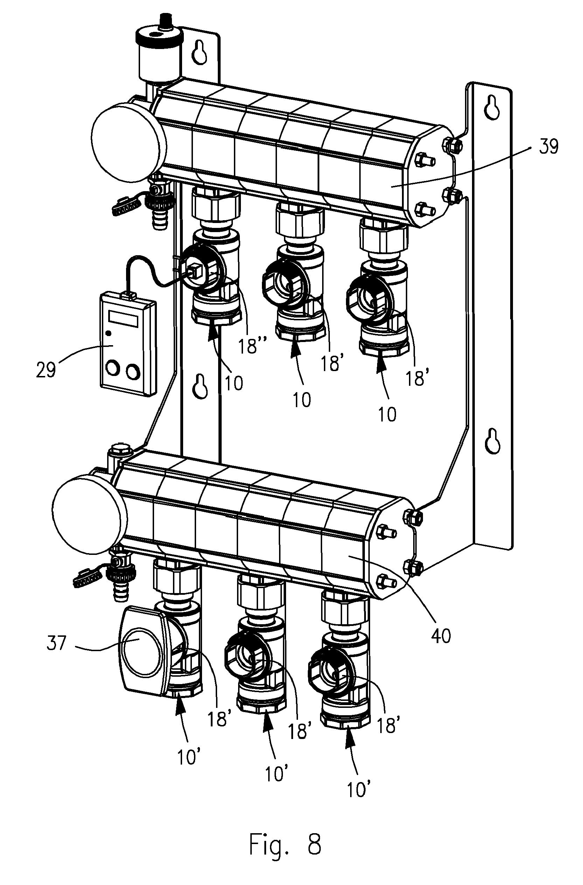

Therefore, by connecting a flow-rate meter 29 to the detecting device 21, for example shown in Fig. 8, set to process the aforementioned control signal, it is possible to obtain the value of the fluid flow-rate reliably and precisely.

In substitution of the Vortex probe 28 and Vortex generating member 27, it is possible to use a flow-rate detecting device 21 of any other suitable type.

In the case of the Vortex detecting device 21, the valving member 15 and the second control member 18" preferentially each have a first hole 20', respectively 26', axially aligned each other for the introduction of the Vortex member 27 into the passage 17, and a second hole 20", respectively 26", axially aligned each other for introduction of the probe 28 into the same flow passage 17.

The flow-rate detecting device 21 may therefore be positioned and press-fitted into a seat of the control member 18".

Preferentially, for allowing a sealed insertion and removal of the control members 18', 18", the side aperture 19 of the valve body 11' has an internal cylindrical surface to achieve the necessary seal with a corresponding cylindrical surface of the control member 18', 18".

Starting from the external edge of a contact surface 30, the valve body 11' has an annular wall 31 which extends according to the rotational axis of valving member 15, provided with a circular slot for housing a clip ring 32 to retain the control member 18', 18", as explained below.

Each control member 18', 18", circumferentially to the peripheral wall 24, on an external side, has an appropriate seat for housing a gasket 33 suitable to form a seal on the inside cylindrical surface of the aperture 19; the seat is positioned close to the bottom wall 23, whereas in an axially spaced apart position from the aforementioned seat, on a side opposite to the bottom 23, each control member 18', 18" also has an annular flange 34 which radially extends from an external side of the peripheral wall 24.

The flange 34 rests against the contact surface 30 of the valve body 11' when the control member 18', or 18", is correctly positioned in the aperture 19; in this position, the control member 18' or 18", chosen each time, may be rotatably and sealingly connected to the valve body 11, by the clip ring 32 and the sealing gasket 33.

The clip ring 32 is, for example, in the form of a split ring in metal wire with the ends folded radially outwards, as shown in figure 7, positioned at a short distance from each other, to cause radial contraction of the ring by pressing to approach the folded ends of the clip ring.

In the case of the second control member 18" having holes 26', 26" for the Vortex member 27 and the sensing probe 28, in order to prevent leakage of fluid through the same holes 26', 26", an appropriate sealing ring 35 is provided on the Vortex member 27 and on the sensing probe 28, close to the body 21', in order to provide a seal on the internal surfaces of the tubular extensions 26A, 26B of the holes 26', 26" from the bottom wall 23 of the control member 18"; the tubular extensions 26A, 26B thread into the through holes 20', 20" of the valving member 15, once the control member 18" with flow-rate detecting device 21 has been assembled to the valve device 10.

Preferentially the valving member 15, on the side facing the aperture 19, is provided with a flat peripheral surface 22 at which open the through holes 20' and 20", to come in contact with the bottom wall 23 of both control members 18', 18".

Preferentially, as better shown in Figures 2, 4, 5 and 6, the bottom wall 23 of both control members 18', 18" is provided with two protrusion or pins 25 to engage corresponding holes 36 at the flat surface 22 of the ball-shaped valving member 15.

The peripheral wall 24 of each control member 18', 18" is conformed to be connected to a control knob 37, shown in Figures 1 and 8, which may be removably applied to rotate the control member 18', 18"; preferentially, as better shown in Fig. 5, the peripheral wall 24 has flat surfaces 38 on opposite sides, to be engaged by corresponding flat surfaces of the knob 37.

The valve device 10 according to the invention, depending on the type of control member 18', 18", may be used as a simple ON/OFF and flow control valve for adjusting the flow, or as flow-rate detecting device with the simultaneous possibility to cut off the flow.

Once two valve devices 10 and 10' have been installed on a circuit of thermal plant, as explained further on, both control members 18', 18" may be separately used in both valves to detect the flow-rate and respectively to adjust the flow-rate at a required value.

Assuming that both valve devices of the hydraulic circuit are provided with a first control member 18', it is possible to perform flow-rate detection and flow control steps as specified hereinbelow:
- applying the knob 37 to the control member 18' of a first valve device 10;
- rotating the valving member 15 of the first valve device 10 into the closed position by the knob 37, to cut-off the flow;
- removing the knob 37 from the first valve device 10;
- removing the clip ring 32 which retain the control member 18';
- manually removing the first control member 18' from aperture 19 of the body 11' of said first valve device;
- inserting the second control member 18" into aperture 19 of the valve body 11' of the same first valve device 10, allowing the Vortex member 27 and the sensing probe 28 to be threaded into the through holes 20', 20" and penetrate into the flow passage 17 of the valving member 15;
- repositioning the clip ring 32 for retaining the second control member 18" into the body 11' of the first valve device 10;
- applying the knob 37 to the second control member 18" positioned in the first valve device 10;
- rotating the closing member 15 into the open position by the knob 37; and
- removing the knob 37 to allow the connection of flow-rate meter 29 to the flow-rate detecting device 21 of the second control member 18".

Now, by rotating the valving member 15 of the second valve device 10' of the hydraulic circuit, by knob 37, it is possible to change and adjust the flow-rate at a required value red on the flow-rate meter 29.

Upon adjustment of the flow-rate, the second control member 18" may be removed from the first valve device 10, to introduce again the first control member 18', by reversing the previous operations. Therefore, the same second control member 18" and the same knob 37, may be used for detecting and adjusting the flow-rate in a second or other hydraulic circuit provided with two valve members 10 and 10' according to the present invention.

Figure 8 shows the use of some valve devices 10, 10', according to the invention, in combination with delivery and fluid distribution manifolds 39, 40 for detecting and adjusting the flow-rate of corresponding hydraulic circuits, or loops, of a thermal plant, according to the following procedure, starting from the valve devices 10, 10' at the left side of manifolds 39 and 40:
upon closure of the first valve device 10, the first control member 18' is removed and substituted with the second control member 18", by the previously described operations;
upon substitution of the control member 18", the valving member 15 of the valve device 10 is rotated in the open position, the flow-rate meter 29 is connected to the flow-rate detecting device 21 of the valve device 10 of the first delivery circuit, reading the detected flow-rate;
the flow-rate in the first circuit may now be adjusted at a required value by rotating the valving member 15 of the second valve device 10' using the knob 37;
the flow-rate meter 29 is therefore disconnected from flow-rate detecting device 21 of the valve 10;
the second control member 18" is removed and substituted by a first control member 18', to reopen the valve device 10; the above procedure may therefore be repeated for the valve devices 10 and 10' of each circuit of the same thermal plant.

It is clear from the above that a valve device according to the invention, in addition to its simple construction, allows a considerable reduction in plant costs, since once the balancing operations have been performed on a thermal plant, a same second control member 18" and a same flow-rate meter 29, of a kit assembly, may be used for controlling and balancing other thermal plants.

What has been stated and shown with reference to the attached drawings has been provided by way of example and illustration only of the general characteristics of the invention, including a preferential embodiment; other modifications and variants to the ball valve device 10 and control members 18', 18", are therefore possible without deviating from the claims.

## Claims

1. A valve device (10) suitable for detecting a flow-rate in a circuit of a thermal plant, the valve device (10) comprising:
a valve body (11) having inlet and outlet ports (12, 13) for a fluid flow, opening into a chamber (14) for a closure valving member (15);
a ball-shaped valving member (15) having a fluid-flow passage (17) therethrough, rotatably supported in said chamber about a rotational axis transversely extending to the passage (17) for the fluid;
a control device (18', 18") to rotate the valving member (15), sealingly extending through a side aperture (19) of the valve body (11); and
a flow-rate detecting device (21) having a sensing probe (28) extending into the flow-passage (17) of the valving member (15);
**characterised in that** the valve device (10) comprises:
a valving member (15) having at least a first through hole (20') parallely extending to the rotational axis, between the flow passage (17) and a peripheral surface (22) of the valving member (15) facing the side aperture (19) of the valve body (11');
the control device (18', 18") comprising a first control member (18') disengageably connectable to the valving member (15), in an assembled condition of the ball valve device (10); and
a second control member (18") disengageably connectable to the valving member (15) in substitution of the first control member (18'), said second control member (18") being provided with at least one through hole (26A) axially aligneable to the first through hole (20') of the valving member (15); the sensing probe (28) of the flow-rate detecting device (21) extending into the flow passage (17) of the valving member (15) through said axially aligned holes (20', 26A) of the second control member (18") and the valving member (15) of the ball valve device (10).

2. The valve device according to claim 1, **characterised in that** each of said first and second control members (18', 18") has a cup shape body, including a planar bottom surface (23), and a peripheral wall (24) which extends from the edge of said bottom surface (23).

3. The valve device according to claim 1, **characterised in that** the flow-rate control device (21) comprises a Vortex flow sensor, provided with a parallely extending sensing probe (28) and vortex generating member (27) threaded in corresponding through holes (26', 26") in the body of the second control member (18"), axially aligned to corresponding through holes (20', 20") of the ball-shaped valving member (15).

4. The valve device according to claim 2, **characterised in that** a sealing ring (35) is provided between the peripheral wall (24) of the cup-shaped body of each control member (18', 18") and said cylindrical surface of the side aperture (19) of the valve body (11'), each of said control members (18', 18") comprising an annular flange (34) radially extending from the peripheral wall (24).

5. The valve device according to claim 3, **characterised by** comprising a sealing ring (35) on the vortex generating member (27) and on the sensing probe (28).

6. The valve device according to claim 1, **characterised in that** each of said first and second control members (18', 18") comprises holes (36) at a planar peripheral surface (22) of the ball-shaped valving member (15).

7. The valve device according to claim 1, **characterised by** comprising a control knob (37) disengageably connectable to each of said first and second control members (18', 18").

8. A method for detecting and adjusting a flow-rate of a fluid in a first and at least a second hydraulic circuit of a thermal plant, in which each circuit comprises a first ball valve device (10) for detecting a flow-rate and a second flow control valve device (10') for adjusting the flow-rate according to claim 1, the method comprising the steps of:
a) closing the first valve device (10) of the first circuit and substituting the first control device (18') with the second control device (18") provided with the flow-rate detecting device (21);
b) opening said first ball valve device (10) and detecting the flow-rate by connecting a flow-rate meter (29) to the flow-rate detecting device (21);
c) adjusting the flow-rate in the first circuit by the second flow control valve device (10);
d) removing and reusing the same second control device (18") and flow-rate detecting device (21), after removal from the first valve device (10) of the first circuit, to repeat the same steps "a" to "c" for another circuit of the same thermal plant.

9. A flow-rate detection kit for valve devices (10) according to claim 1, said kit comprising: a second control unit (18") provided with a flow-rate control device (21); a flow-rate meter (29) operatively connectable to said flow-rate meter (29), and a control knob (37) removably connectable to said first and second control device (18', 18") of the valve devices (10, 10').
